# EUROPEAN PATENT APPLICATION

(11) **EP 4 831 006 A1**
(43) Date of publication of application: **28.10.2026**
(21) Application number: 25172660.0
(22) Date of filing: 25.04.2025
(51) Int. Cl.: B60R 13/02, B60J 5/04

(54) **INTERIOR PANEL FOR A VEHICLE DOOR, VEHICLE DOOR ASSEMBLY, AND VEHICLE**

(71) Applicant: Volvo Car Corporation, 405 31 Göteborg (SE)
(72) Inventor: SIMKUS, Darius, 40531 Göteborg (SE); QI, Xunan, 40531 Göteborg (SE); BENGTSSON, Fabian, 40531 Göteborg (SE); KUMAR, Sujith, 40531 Göteborg (SE)
(74) Representative: Kransell & Wennborg KB

(57) **Abstract**

The disclosure relates to an interior panel (18) for a vehicle door. The interior panel (18) being configured to be mounted to an interior of a vehicle door structure (16). The interior panel (18) comprises an elongated panel body (20) having a first end and a second end (24) opposite one another. The interior panel (18) further comprises a predetermined bending portion (34) provided on the panel body (20) between the first end and the second end (24) and configured for controlled bending upon side impact. The elongated panel body (20) comprises an attachment interface for mounting the elongated panel body (20) to the vehicle door structure (16). Moreover, the disclosure is directed to a vehicle door assembly (12) comprising a vehicle door structure (16) and an interior panel (18). Furthermore, the disclosure covers a vehicle that comprises an interior panel (18) and/or a vehicle door assembly (12).

## Description

### TECHNICAL FIELD

The present disclosure relates to an interior panel for a vehicle door that is configured to be mounted to an interior of a vehicle door structure.

Moreover, the present disclosure relates to a vehicle door assembly.

Furthermore, the present disclosure relates to a vehicle comprising an interior panel and/or a vehicle door assembly.

### BACKGROUND ART

An interior panel may be mounted to an inside of a vehicle door in order to cover a base structure of the vehicle door which is often made from metal. The interior panel may comprise an optically pleasant appearance and/or a haptically comfortable surface for an occupant of the vehicle.

Such an interior panel also is a point of contact for an occupant, e.g. upon a side impact of the vehicle that may impact into the vehicle door. Thus, also from a safety standpoint the interior panel is an important part.

### SUMMARY

It is therefore an objective of the present disclosure to provide an improved interior panel for a vehicle door. In particular safety characteristics of the interior panel shall be improved.

The problem is at least partially solved or alleviated by the subject matter of the independent claims of the present disclosure, wherein further examples are incorporated in the dependent claims.

According to a first aspect, there is provided an interior panel for a vehicle door. The interior panel is configured to be mounted to an interior of a vehicle door structure. The interior panel comprises:
- an elongated panel body having a first end and a second end opposite one another, and
- a predetermined bending portion provided on the panel body between the first end and the second end and configured for controlled bending upon side impact.
The elongated panel body comprises an attachment interface for mounting the elongated panel body to the vehicle door structure.

The vehicle door may be understood as a door of a vehicle through which an occupant of the vehicle may enter or exit an interior of a cabin of the vehicle. The vehicle door structure may comprise a base structure that provides structural integrity to the vehicle door. The base structure may be made from metal material. The interior of the vehicle door structure is the side of the vehicle door structure that faces towards the interior of the cabin of the vehicle when the vehicle door is mounted to the vehicle and closed. The interior panel being configured to be mounted to the interior of the vehicle door structure may particularly mean that the interior panel is configured to be mounted adjacent to a lower edge of a daylight opening of the vehicle door structure. In this context, the daylight opening of the vehicle door structure may be defined as a window opening of the vehicle door structure narrowed by a sealing that prevents moisture ingress into the cabin of the vehicle at an edge of the window opening. The lower edge of the window opening is the bottom edge of the window opening when the vehicle door is mounted to the vehicle and when the vehicle contacts a roadway in a standard driving orientation. Often, the lower edge of the window opening is shaped as a substantially straight line that is oriented substantially horizontally.

The panel body being elongated may be understood in that the panel body comprises an extension in a length direction that is longer than any extension of the panel body perpendicular thereto, i.e. an extension in a width direction and an extension and a thickness direction. The length direction of the elongated panel body may also be referred to as a first axis of the elongated panel body. The first end and the second end are arranged opposite one another along the length direction of the elongated panel body. When the interior panel is mounted to the interior of the vehicle door structure and when the vehicle door comprising the vehicle door structure is mounted to the vehicle, the second end of the elongated panel body may particularly be located adjacent to a B-pillar of the vehicle. This may be understood in that the second end of the elongated panel body is located closer to the B-pillar of the vehicle than the first end of the elongated panel body. In this context, it is emphasized that the interior panel is configured be mounted to a vehicle door structure of a front door or of a rear door of the vehicle.

The predetermined bending portion provided on the panel body between the first end and the second end may be understood as a structurally weakened portion, in particular a locally weakened portion, of the elongated panel body. The predetermined bending portion may allow a controlled bending, i.e. a bending in a controlled manner, of the elongated panel body around a second axis of the elongated panel body that is substantially perpendicular to the length direction, i.e. to the first axis, if a force is exerted onto the elongated panel body along a third axis that is substantially perpendicular to the first axis and to the second axis. Such a force may be created upon side impact on the vehicle door if the interior panel is mounted to the interior of the vehicle door structure. The side impact may be identical or at least similar to a side impact in a standardized crash test for a vehicle like the Euro NCAP lateral pole test or the IIHS side impact crash test. Even though herein generally referring to side impact, it should be noted that the present disclosure provides advantages also at impacts, i.e. crashes or collisions, not necessarily being classified as side impacts, but also for example if a vehicle is experiencing an impact directed slightly from behind or slightly from the front, and to the side of the vehicle.

The attachment interface of the elongated panel body for mounting the elongated panel body to the vehicle door structure may comprise attachment means such as bolts, clips, rivets or at least openings in the attachment interface for inserting said attachment means. Additionally or alternatively, the attachment interface may comprise an interface of the elongated panel body that is weldable and/or adhesively joinable with the vehicle door structure. The attachment interface has the effect that the elongated panel body may be attached to the vehicle door structure in a reliable manner. In more detail, the first end and/or the second end of the elongated panel body may be attached to the vehicle door structure. This prevents the first end and/or the second end of the elongated panel body from loosening from the vehicle door structure upon side impact and from protruding into the interior of the vehicle cabin. In particular, it may be avoided that, at impact, the interior panel detaches from the vehicle door structure, and instead it will bend in a more controllable and more predictable manner, also enabling that sufficient space is maintained for an occupant of the vehicle, in particular for the upper body of the occupant. The upper body of an occupant is herein defined as thorax and ribs, arm and shoulder, neck, and head. Depending on the size of the occupant, and the particular implementation of the present disclosure, i.e. dependent on e.g. at which height the interior panel is arranged for a specific vehicle, the additional protection provided by the present disclosure is more or less prominent or significant for different parts of the upper body for the respective occupant. Controlled and predictable bending of the interior panel, and that sufficient space is maintained for an occupant, is advantageous for manifold reasons. E.g., it prevents or reduces the risk of obstructing an occupant from lifting her/his arm when a side airbag, if present, is deployed. Obstructing an occupant form lifting her/his arm increases the risk of upper body, particularly rib and thorax, compression. Moreover, this configuration ensures sufficient space for the deployment of a side airbag, if present. Further, it prevents, or reduces the risk of, an inflatable curtain, if present, being obstructed, hence, not being deployed as intended. More precisely, the present disclosure has the effect that more space for the inflatable curtain, if present, is provided between a door panel waister rail and head and/or neck of an occupant. This decreases a risk of inflatable curtain being "bottomed out", meaning being completely compressed between head/neck and waister rail. Additionally, it prevents, or limits the risk of, sharp, protruding, edges being formed at impact.

The attachment interface and the predetermined bending portion together have the synergistic effect that mechanical stress acting onto the attachment interface during side impact may be reduced compared to a conventional interior panel without a predetermined bending portion. This is because if, for example, the interior panel according to the present disclosure is side impacted in a middle area, the interior panel may bend around its second axis at the predetermined bending portion instead of guiding excessive transverse forces to the attachment interface. Yet an advantage of the present disclosure is that the characteristics of the bending, or behavior, of the interior panel at side impact is, at least to a larger extent, controllable and easier to predict. In conventional interior panels without a predetermined bending portion, excessive transverse forces resulting from a side impact and guided to the attachment interface may result in strong tensile forces acting at the attachment interface between the interior panel and the interior of the vehicle door structure. This may cause the conventional interior panel to loosen from the vehicle door structure and to protrude into the interior of the cabin with at least one of its ends. This, in turn, may affect, or reduce efficiency of, other safety functionalities such as e.g. side airbags and inflatable curtains, if such are present. By contrast, the first end and the second end of the interior panel according to the present disclosure are kept closely to the vehicle door structure, i.e. are prevented from protruding into the interior of the cabin, by the attachment interface and with the aid of the predetermined bending portion, upon side impact. Put otherwise, the attachment interface of the interior panel according to the present disclosure may be designed in a lighter way, compared to an attachment interface of the conventional interior panel, such that it withstands the reduced stresses acting thereon during side impact without compromising an occupant safety. The fact that the interior panel is kept closely to the vehicle door structure upon side impact also ensures that sufficient space is maintained for an occupant located adjacent to the interior panel.

In an example, the predetermined bending portion may comprise a weakened portion having a round shape, e.g. a circular shape. In another example, the predetermined bending portion may comprise a weakened portion having an elongated shape, e.g. an oblong shape. In yet another example, the predetermined bending portion may comprise a weakened portion having a quadrangular shape, e.g. a rectangular shape. Further in another example, the predetermined bending portion may comprise a plurality of weakened portions having shapes that are of the same or of different kinds. The plurality of weakened portions may be evenly distributed in vertical direction. Moreover, a middle axis of the predetermined bending portion may be identical or at least parallel to the second axis of the interior panel.

The predetermined bending portion, more precisely the middle axis of the predetermined bending portion, may be located at a distance from the second end that is 5% to 75% of a total length of the interior panel measured along the first axis between the first end and the second end. In a further example, the predetermined bending portion, more precisely the middle axis of the predetermined bending portion, may be located at a distance from the second end that is 10% to 50% of the total length of the interior panel. In another further example, the predetermined bending portion, more precisely the middle axis of the predetermined bending portion, may be located at a distance from the second end that is 20% to 40% of the total length of the interior panel. Thus, the bending portion is positionally, i.e. with respect to a position, predetermined. This means that the interior panel does not bend in an arbitrary region but in a well-defined region upon side impact. Where exactly the bending portion, or bending portions, advantageously should be provided is a design parameter that has to be determined on a case-by-case basis dependent on the particular implementation of the present disclosure. Choosing such a position of the predetermined bending portion with respect to the second end has the effect that at least a portion of the attachment interface near the second end of the interior panel body is at least partially relieved from transverse tensile forces acting thereon. Thus, the second end of the interior panel body is prevented from protruding into the interior of the cabin of the vehicle upon side impact if the interior panel is mounted to the vehicle door structure of the vehicle door and if the vehicle door is mounted to the vehicle.

In an example, the predetermined bending portion has a locally reduced thickness. An overall thickness of the interior panel, more precisely of the panel body, may be 1,5 mm to 4 mm, e.g. 2 mm. The overall thickness is understood as a thickness of the panel body outside the predetermined bending portion. Inside the predetermined bending portion, a thickness of the panel body may be 5% to 75% of the overall thickness. In an example, the thickness of the panel body inside the predetermined bending portion may be 40% to 60% of the overall thickness. The locally reduced thickness causes a mechanical weakening of the panel body of the interior panel. This facilitates a controlled bending of the panel body at the predetermined bending portion around the second axis of the interior panel if an impact force is exerted onto the panel body.

In an example, the predetermined bending portion is configured such that a void is provided at the predetermined bending portion. The void may be understood as an extreme of a locally reduced thickness of the predetermined bending portion. In this extreme, the thickness of the predetermined bending portion is at least partially reduced to zero. The void may extend across an entire width of the panel body and therefore split the panel body into two parts. However, it is also conceivable that the void only extends partially across a width of the panel body such that the panel body remains as a single part. Alternatively, the void may be understood as a void inside a material of the panel body, e.g. like a gas bubble or cavity inside the material of the panel body. In this alternative case, a thickness of the predetermined bending portion may even appear unchanged compared to the overall thickness of the panel body when the panel body is viewed from an outside. Of course, it is also conceivable that the predetermined bending portion comprises both a locally reduced thickness and a void inside the material of the panel body. Providing a void in the panel body is an effective and potentially material-saving way of creating a mechanical weakening in the panel body of the interior panel.

In an example, the interior panel further comprises a reinforcement structure configured to support the panel body. The reinforcement structure comprises an elongated reinforcement body having a first end and a second end. The elongated reinforcement body extends substantially in parallel to the panel body. The first end of the reinforcement body is arranged adjacent to the first end of the panel body. The second end of the reinforcement body is arranged adjacent to the second end of the panel body.

The reinforcement body being elongated may be understood in that the reinforcement body comprises an extension in a length direction that is longer than any extension of the reinforcement body perpendicular thereto, i.e. an extension in a width direction and an extension and a thickness direction. The first end and the second end are arranged opposite one another along the length direction of the reinforcement body. When the interior panel is mounted to the interior of the vehicle or structure and when the vehicle door comprising the vehicle door structure is mounted to the vehicle, the second end of the elongated reinforcement body may particularly be located adjacent to a B-pillar location of the vehicle. This may be understood in that the second end of the elongated reinforcement body is located closer to the B-pillar of the vehicle than the first end of the elongated reinforcement body, if a B-pillar is present. In a case in which the vehicle does not comprise a B-pillar, this applies to the location where normally the B-pillar would be. In other words, the position of the first ends of the panel body and of the reinforcement body along the interior panel substantially match. Also, the position of the second ends of the panel body and of the reinforcement body along the interior panel substantially match.

Providing the reinforcement structure is a measure of differential design of the interior panel. This means that the interior panel body may be configured to comprise an optically pleasant appearance and/or a haptically comfortable surface for an occupant of the vehicle. The reinforcement structure of the interior panel may provide structural stability to the interior panel such that it does not get dented if, for example, the occupant leans onto the interior panel. Thus, the functions of appearance and structural stability of the interior panel are separated into two components of the interior panel. This may facilitate a manufacturability of the interior panel.

In an example, the reinforcement body is configured such that a void is provided adj acent to the predetermined bending portion of the panel body. The void may extend across an entire width of the reinforcement body and therefore split the reinforcement body into two parts. The width of the reinforcement body extends perpendicular to a length of the reinforcement body. Since the reinforcement body extends substantially in parallel to the panel body, the length of the reinforcement body substantially extends in parallel to the first axis, i.e. the length direction, of the panel body. For the same reason, the width of the reinforcement body substantially extends along the second axis of the panel body. Instead of extending across the entire width, it is also conceivable that the void only extends partially across a width of the reinforcement body such that the reinforcement body remains as a single part. Alternatively, the void may be understood as a void inside a material of the reinforcement body, e.g. like a gas bubble or cavity inside the material of the reinforcement body. In this alternative case, a thickness of the reinforcement body may appear unchanged in a region of the void compared to an overall thickness of the reinforcement body when the panel body is viewed from an outside. Providing a void in the reinforcement body is an effective and potentially material-saving way of creating a mechanical weakening in the reinforcement body of the interior panel.

The void in the reinforcement body, more precisely a middle axis of the void in the reinforcement body, may be located at a distance from the second end of the reinforcement body that is 5% to 75% of a total length of the reinforcement body measured along the length between the first end and the second end of the reinforcement body. In a further example, the void in the reinforcement body, more precisely the middle axis of the void in the reinforcement body, may be located at a distance from the second end of the reinforcement body that is 10% to 50% of the total length of the reinforcement body. In another further example, the void in the reinforcement body, more precisely the middle axis of the void in the reinforcement body, may be located at a distance from the second end of the reinforcement body that is 20% to 40% of the total length of the reinforcement body. In other words, a position of the void in the reinforcement body along a length of the interior panel may be substantially the same as a position of the predetermined bending portion in the panel body along the length of the interior panel. Choosing substantially the same positions for the void in the reinforcement body and for the predetermined bending portion in the panel body has the effect that the controlled bending of the interior panel during a side impact is facilitated. This means that the controlled bending of the interior panel is not impeded by a high stiffness and/or a high strength of the reinforcement body in regions outside the void.

In an example, the reinforcement structure comprises a mounting interface for mechanically connecting the reinforcement structure to the vehicle door structure. The mounting interface of the reinforcement structure may comprise attachment means such as bolts, clips, rivets or at least openings in the mounting interface for inserting said attachment means. Additionally or alternatively, the attachment interface may comprise an interface of the elongated panel body that is weldable and/or adhesively joinable with the vehicle door structure. The mounting interface has the effect that the reinforcement structure may be attached to the vehicle door structure in a reliable manner. In more detail, the first end and/or the second end of the reinforcement body may be attached to the vehicle door structure. This prevents the first end and/or the second end of the elongated panel body from loosening from the vehicle door structure upon side impact and from protruding into the interior of the vehicle cabin. In particular, it may be avoided that a sharp edge of the interior panel at the first end and/or at the second end of the panel body and/or of the reinforcement body hits an upper body of an occupant of the vehicle during side impact.

In an example, the reinforcement structure further comprises a mounting interface for mechanically supporting the reinforcement structure on the sealing at the lower edge of the window opening in the vehicle door structure. This has the effect that the reinforcement structure may not only be supported at its first end and at its second end by the vehicle door structure but point by point or even continuously between its first end and its second end. This has the further effect that the reinforcement structure may be designed in a slender and weight saving manner while it is still capable of supporting the panel body, for example when an occupant of the vehicle leans thereon.

In an example, the panel body and/or the reinforcement body comprise a plastics material. The plastics material may comprise a thermoplastic or a thermoset material. Particularly the panel body may additionally or alternatively comprise an elastomer material. It is also possible that the plastics material comprises fibers. In an example, the panel body and/or the reinforcement body may comprise a polypropylene material with natural fibers. This may create a haptically comfortable surface of the panel body for an occupant of the vehicle. Using a plastics material for the panel body and/or for the reinforcement body has the effect that the panel body and/or the reinforcement body may be manufactured by injection molding. This is a manufacturing technique particularly suitable for high volume production, as required in automotive production. Moreover, plastics materials are lightweight compared to metallic structures. Thermoplastic materials offer a comparatively good recycling potential.

In an example, the panel body is connected to the reinforcement body by at least one welded joint. A welded joint is a reliable way of permanently connecting the panel body to the reinforcement body. Thus, a structurally sound interior panel may be manufactured. The welded joint may be a particularly viable way of joining the panel body to the reinforcement body if both the panel body and the reinforcement body comprise meltable portions, i.e. if they are at least partially meltable. This may particularly be the case if both the panel body and the reinforcement body comprise a thermoplastic material. A welded joint has the further advantage that it does not necessarily add weight to the connection between the panel body and the reinforcement body as other connection means such as screws, bolts or rivets would do. Moreover, a welded joint of at least two components of a plastic material does not comprise pointed edges like said other connection means. This is particularly beneficial in preventing injuries to an occupant of the vehicle during side impact.

In an example, the welded joint comprises a plurality of spot-welds distributed between the respective first and second ends of the panel body and the reinforcement body. This means that the panel body is not only joined to the reinforcement body in a single spot but in a plurality of spots. This has the effect that a structurally sound interior panel may be provided. In a further example, the plurality of spot-welds may be evenly distributed along the length of the panel body and/or of the reinforcement body. Having a plurality of spot-welds which may be optionally distributed evenly reliably distributes loads acting on the panel body and the reinforcement body, thereby enhancing mechanical stability. Moreover, bending will be more predictable. Additionally, having a plurality of spot-welds enhances fail safety, i.e. even if one or more spot-welds fail, the mechanical connection is maintained.

In an example, the panel body is at least partially curved, wherein the panel body is convex when seen from a side configured to face the interior of the cabin. The panel body may be curved around the first axis, i.e. along the length direction, of the panel body. The degree of curvature of the panel body may remain the same or change along the length direction of the panel body and/or along the width of the panel body. Since the reinforcement body extends substantially in parallel to the panel body, it is understood that the reinforcement body may comprise the same or at least a similar kind of curvature as the panel body in order to be able to mechanically support the panel body. An at least partial curvature of the panel body may imply that there are no sharp edges, particularly along the length direction, on the inside surface of the panel body. The inside surface of the panel body is that surface that is configured to face the interior of the cabin of the vehicle. Similarly, a convex shape of the panel body when seen from the side configured to face the interior of the cabin ensures that edges of the panel body along the length direction of the panel body do not protrude into the interior of the cabin of the vehicle upon side impact. All in all, due to the curvature and shape of the panel body, occupant safety is enhanced.

According to a second aspect, there is provided a vehicle door assembly comprising:
- a vehicle door structure, and
- an interior panel according to the first aspect.
The interior panel is mounted to an inner side of the vehicle door structure. The vehicle door structure may comprise a base structure that provides structural integrity to a vehicle door. This base structure may be made from a metal material. The vehicle door may be understood as a door of a vehicle through which an occupant of the vehicle may enter or exit an interior of a cabin of the vehicle. The interior of the vehicle door structure is the side of the vehicle door structure that is configured to face towards the interior of the cabin of the vehicle when the vehicle door is mounted to the vehicle and closed. The interior panel may be mounted to the interior of the vehicle door structure. This may particularly mean that the interior panel is mounted adjacent to a lower edge of a daylight opening of the vehicle door structure. In this context, the daylight opening of the vehicle door structure may be defined as a window opening of the vehicle door structure narrowed by a sealing that prevents moisture ingress into the cabin of the vehicle at an edge of the window opening. The lower edge of the window opening is the bottom edge of the window opening when the vehicle door is mounted to the vehicle and when the vehicle contacts a roadway in a standard driving orientation. Often, the lower edge of the window opening is shaped as a substantially straight line that is oriented substantially horizontally.

In an example, the reinforcement structure is arranged between the inner side of the vehicle door structure and the panel body. The reinforcement structure may comprise an elongated reinforcement body having a first end and a second end. The elongated reinforcement body may extend substantially in parallel to the panel body. This has the effect that the panel body may be mechanically supported by the reinforcement structure. Also, the reinforcement structure may be mechanically connected to the vehicle door structure. Thus, forces introduced into the panel body may be guided to the vehicle door structure via the reinforcement structure. Additionally, the reinforcement structure may be arranged between the lower edge of the daylight opening of the vehicle door structure and the panel body. In other words, the reinforcement structure may be mechanically supported on the sealing at the lower edge of the window opening the vehicle door structure. This has the effect that the reinforcement structure may not only be supported at its first end and at its second end by the vehicle door structure but point by point or even continuously between its first end and its second end. This has the further effect that the reinforcement structure may be designed in a slender and weight-saving manner while it is still capable of supporting the panel body, for example when an occupant of the vehicle leans thereon.

In an example, the reinforcement structure comprises a mounting interface at its second end. The reinforcement structure is mounted to the inner side of the vehicle door structure via its mounting interface and via a bracket. The mounting interface at the second end of the reinforcement structure may comprise attachment means such as bolts, clips, rivets or at least openings in the mounting interface for inserting said attachment means. The mounting interface has the effect that the second end of the reinforcement structure may be attached to the vehicle door structure. The bracket may be understood as a separate piece between the vehicle door structure and the reinforcement structure. The reinforcement structure may be mounted to the bracket via its mounting interface. The bracket may be mounted to the vehicle door structure via a bolt, a rivet or a weld. A welded joint between the bracket and the vehicle door structure may be possible because the bracket may comprise the same or at least a similar metal material as a metal base structure of the vehicle door structure. This prevents the second end of the elongated reinforcement body from loosening from the vehicle door structure upon side impact and from protruding into the interior of the vehicle cabin. This means that sufficient space is maintained for the upper body of an occupant of the vehicle, in particular for the arm, the thorax and ribs, head, and neck. Moreover, this configuration ensures a sufficient space for the deployment of a side airbag, if present, and/or of an inflatable curtain, if present. In particular, it may be avoided that a sharp edge of the interior panel at the first end and/or at the second end of the panel body and/ or of the reinforcement body hits an upper body of an occupant of the vehicle. The bracket may be mounted to the vehicle door structure at a lower portion of the bracket. In an upper portion of the bracket, the reinforcement structure may be mounted to the bracket. The terms lower portion and upper portion and may be understood with respect to a vertical direction when the vehicle door assembly is mounted to a vehicle and when the vehicle contacts a roadway in a standard driving orientation. The bracket being mounted to the vehicle door structure at its lower portion has the effect that the mechanical connection between the bracket and the vehicle door structure may be further away from a shoulder region of an occupant of the vehicle. This allows more freedom of movement for an arm of the occupant during a side impact, and allows deployment of side airbags, if present and/or an inflatable curtain, if present. The arm of the occupant being able to move more or less freely, will, if a side airbag and/or an inflatable curtain is deployed, enables the arm to move away from the thorax and the ribs, potentially leading to reduced thorax and rib compression. Moreover, a risk of injuries of the head and/or neck is reduced.

In an example, the bracket comprises two portions which are angled relative to one another. The two portions may be lower portion and the upper portion of the bracket as explained above. The two portions being angled relative to one another has the effect that the lower portion of the bracket may be mounted to the vehicle door structure at an interface of the vehicle door structure that is oriented substantially parallel to a standard forward driving direction of the vehicle if the vehicle door assembly is mounted to the vehicle. Thereby, impact forces may be distributed over a larger area such that the structural integrity of the reinforcement structure is improved. Additionally, the bracket may be mounted so that the surfaces of the bracket, that are considered potentially most dangerous for an occupant, e.g. sharp and stiff edges of the bracket, are directed away from the occupant. The bracket may e.g. be angled essentially at 45 degrees. Thus, in case one portion of the bracket is mounted to the vehicle door structure at an interface of the vehicle door structure that is oriented substantially parallel to a standard forward driving direction of the vehicle, the other portion of the bracket extends at essentially 45 degrees in relation to the standard forward driving direction of the vehicle, i.e. in relation to a longitudinal extension of the vehicle. Additionally, the configuration of the bracket allows the bracket to flex at high loads. Allowing the bracket to flex contributes to decreasing loads experienced by the bracket connection and reduces the risk of high local forces directed towards an occupant. Moreover, this configuration reduces peak loads on the bracket and waister rail reinforcement connection.

In an example, a portion of the bracket attached to the reinforcement structure is arranged closer to an end of the vehicle door structure that is configured to be arranged adjacent to a B-pillar location of the vehicle than a portion of the bracket attached to the vehicle door structure. In a case in which the vehicle comprises a B-pillar, the B-pillar is arranged at the B-pillar location. In a case in which the vehicle does not comprise a B-pillar, the B-pillar location is the location where normally the B-pillar would be. If the vehicle door structure forms part of a front door of the vehicle, said end of the vehicle door structure may be a rear end of the vehicle door structure. If the vehicle door structure forms part of a rear door of the vehicle, said end of the vehicle door structure may be a front end of the vehicle door structure. This may be understood in that the upper portion of the bracket, which may be closer to a shoulder region of an occupant of the vehicle, may be positioned closer to a B-pillar location of the vehicle than the lower portion of the bracket when the vehicle door assembly is mounted to the vehicle. This creates more freedom of movement for an arm of the occupant during a side impact. Moreover, deployment of side airbags and/or an inflatable curtain, if present, is not hindered. As previously mentioned, the arm of the occupant being able to move more or less freely, will, if a side airbag is deployed, enable the arm to move away from the thorax and the ribs, potentially leading to reduced thorax and rib compression. Moreover, a risk of injury for a neck and/or a head is reduced. The explained positioning of the upper portion relative to the lower portion of the bracket may be allowed by the upper portion being angled relative to the lower portion as has been explained above.

According to a third aspect, there is provided a vehicle comprising an interior panel according to the first aspect and/or a vehicle door assembly according to the second aspect. Such a vehicle comprises a predetermined bending portion on a panel body between a first end and a second end of a panel body of the interior panel. The interior panel may be mounted to an interior of a vehicle door structure via an attachment interface of the interior panel, particularly at or in the vicinity of the second end of the panel body. The second end of the panel body may be closer to a B-pillar location of the vehicle than the first end of the panel body when the vehicle door assembly or the interior panel is mounted to the vehicle. The predetermined bending portion may be understood as a structurally weak portion, in particular a locally weak portion, of the panel body. The predetermined bending portion may allow a controlled bending of the panel body around a second axis of the panel body that is substantially perpendicular to a length direction, i.e. to a first axis, if a force is exerted onto the elongated panel body along a third axis that is substantially perpendicular to the first axis and to the second axis. Such a force may be created upon side impact into the vehicle, more precisely upon a side impact that deforms a door of the vehicle towards an interior of a cabin of the vehicle. The predetermined bending portion together with a mount of the interior panel at or in a vicinity of the second end of the panel body to the vehicle door structure have the synergistic effect that stresses acting onto the attachment interface during side impact may be reduced compared to a conventional interior panel without a predetermined bending portion. This is because if, for example, the interior panel is side impacted in a central area along its third axis, the interior panel may bend around its second axis at the predetermined bending portion instead of guiding excessive transverse forces to the attachment interface. In conventional interior panels without a predetermined bending portion, excessive transverse forces resulting from a side impact and guided to the attachment interface may result in strong tensile forces acting at the attachment interface between the interior panel and the interior of the vehicle door structure. This may cause the conventional interior panel to loosen from the vehicle door structure and to protrude into the interior of a cabin of the vehicle with at least one of its ends. By contrast, the first end and the second end of the interior panel of the first aspect are kept closely to the vehicle door structure, i.e. are prevented from protruding into the interior of the cabin, by the attachment interface and with the aid of the predetermined bending portion, upon side impact. This means that sufficient space is maintained for an occupant of the vehicle, in particular in the arm region and the thorax region. Furthermore, the interior panel according to the first aspect allows a free expansion of a side airbag, if present, and/or of an inflatable curtain, if present, that is inflated upon impact into the vehicle between the inside of the vehicle door and the occupant. This enhances occupant safety. As an example, the front row of the vehicle may be provided with both side airbag and inflatable curtain, whereas the second row may only be provided with an inflatable curtain.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to the present disclosure comprising a vehicle door assembly according to the present disclosure, wherein the vehicle door assembly comprises an interior panel according to the present disclosure,
- Figure 2: shows the vehicle door assembly of Figure 1 in a more detailed view,
- Figure 3a: shows a sectional view along line A-A through the interior panel of the vehicle door assembly of Figure 2,
- Figure 3b: shows a sectional view along line B-B through the interior panel of the vehicle door assembly of Figure 2,
- Figure 4: shows a detailed view on a second end of a reinforcement structure of the interior panel of a second example of the present disclosure,
- Figure 5: shows the mount of the reinforcement structure to the vehicle door structure of Figure 4 in a more detailed view,
- Figure 6: shows a partly transparent view of the interior panel of Figures 4 and 5 illustrating a void in the reinforcement structure of the interior panel,
- Figure 7: shows the interior panel of Figures 4 to 6 in a bent state during a side impact or after a side impact,
- Figure 8: shows a comparison of a free space for an arm of an occupant of the vehicle if the vehicle comprises the interior panel of Figure 7, which is in a bent state indicated by the dashed line, to a limited space for the arm of the occupant if the vehicle comprises an interior panel that does not bend during a side impact, which is indicated by a dotted line.

### DETAILED DESCRIPTION

The Figures are merely schematic representations and serve only to illustrate examples of the disclosure. Identical or equivalent elements are in principle provided with the same reference signs.

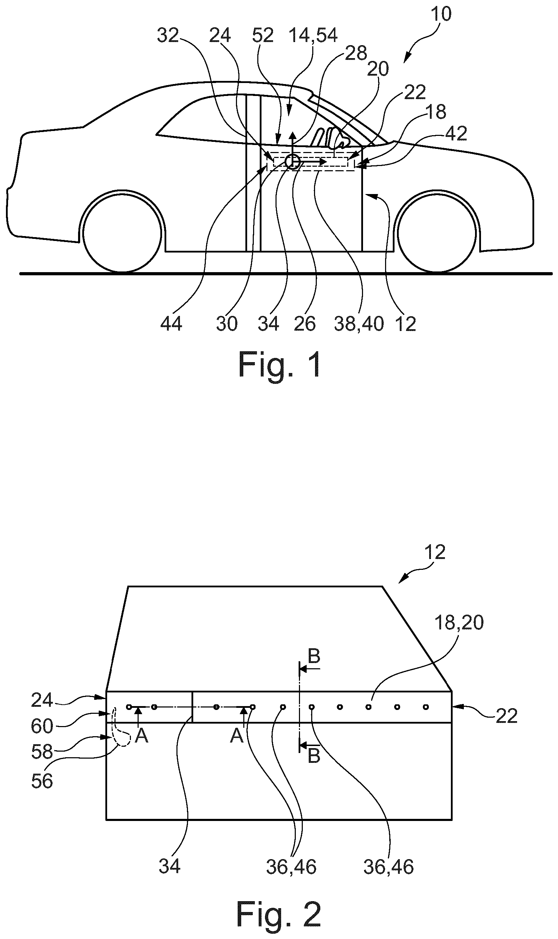

Figures 1 to 3 shows a first embodiment according to the present disclosure.

Figure 1 shows a vehicle 10.

The vehicle 10 comprises a vehicle door assembly 12. An occupant may enter or exit an interior 14 of a passenger cabin of the vehicle 10 through the vehicle door assembly 12.

The vehicle door assembly 12 comprises a vehicle door structure 16 and an interior panel 18 mounted to an inner side of the vehicle door structure 16.

The inner side of the vehicle door structure 16 faces the interior 14 of the passenger cabin if the vehicle door assembly 12 is closed. Moreover, the vehicle door structure 16 comprises a metal base structure.

The interior panel 18 comprises an elongated panel body 20 extending along a length direction between a first end 22 and a second end 24. The length direction may also be referred to as a first axis 26 of the elongated panel body 20. Moreover, the elongated panel body 20 comprises a width direction, which may be referred to as a second axis 28 of the elongated panel body 20, that is perpendicular to the length direction. Furthermore, the elongated panel body 20 comprises a transverse direction, which may be referred to as a third axis 30 of the elongated panel body 20, that is perpendicular to the length direction and perpendicular to the width direction.

The second end 24 of the panel body 20 is located closer to a B-pillar 32 of the vehicle 10 than the first end 22. In the present example of Figure 1, the vehicle door assembly 12 is a front door of the vehicle 10. However, the vehicle door assembly 12 may also be a rear door of the vehicle 10 without departing from the scope of the present disclosure. In such a case, the second end 24 of the panel body 24 is still arranged closer to the B-pillar 32 of the vehicle 10 than the first end 22.

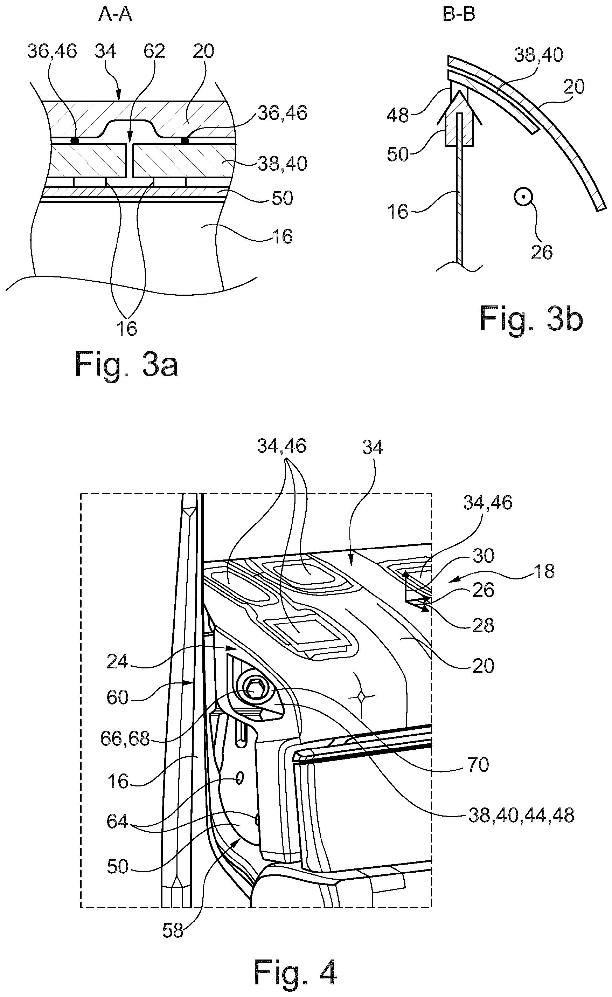

As can be seen from the sectional view in Figure 3b, the panel body 20 of the interior panel 18 is curved around the first axis 26. When viewed from the interior 14 of the passenger cabin of the vehicle 10, the curvature of the panel body 20 is convex.

The panel body 20 of the interior panel 18 comprises a predetermined bending portion 34. As can be seen from Figures 1 and 2, the predetermined bending portion 34 is arranged at a distance from the second end that is approximately 25% of a length of the panel body 20 measured between the first end 22 and the second end 24.

As can be seen from the sectional view provided in Figure 3a, the panel body 20 comprises a locally reduced thickness at the predetermined bending portion 34 compared to a thickness of remaining or surrounding portions of the panel body 20. Thus, the panel body 20 of the interior panel 18 is locally weakened at the predetermined bending portion 34.

The panel body 20 further comprises an attachment interface 36 through which the panel body 20 is mounted to the vehicle door structure 16. The role of the attachment interface 36 will become clearer from the following explanations on a reinforcement structure 38.

The interior panel 18 also comprises the reinforcement structure 38. The reinforcement structure 38 is arranged between the panel body 20 and an inner side of the vehicle door structure 16. The inner side of the vehicle or structure 16 is that side that faces the interior 14 of the passenger cabin of the vehicle 10.

The reinforcement structure 38 comprises an elongated reinforcement body 40 extending along a length direction between a first end 42 and a second end 44 of the reinforcement body 40. The first end 42 and the second end 44 of the reinforcement body 40 are adjacent to the first end 22 and to the second end 24 of the panel body 20, respectively. The length direction of the reinforcement body 40 is substantially parallel to the length direction of the panel body 20. Thus, the reinforcement structure 38 may mechanically support the panel body, for example when an occupant of the vehicle 10 leans onto the panel body 20.

Through its attachment interface 36, the panel body 20 is attached to the reinforcement structure 38, more precisely to the reinforcement body 40. In the present example, the attachment interface comprises a plurality of spot-welds 46 distributed between the first ends 22, 42 and the second ends 24, 44 of the panel body 20 and of the reinforcement body 40. Applying spot-welds 46 to attach the panel body 20 to the reinforcement body 40 is possible since both the panel body 20 and the reinforcement body 40 comprise a thermoplastic polymer material.

The reinforcement structure 38 comprises a mounting interface 48 for connecting the reinforcement structure 38 to the vehicle door structure 16. In the present example, the reinforcement structure 38 is mounted to a sealing 50 that is applied to a lower edge 52 of a daylight opening 54 of the vehicle door assembly 12 via the mounting interface 48.

The daylight opening 54 of the vehicle door assembly 12 is created by a window opening of the vehicle door structure 16 narrowed by the sealing 50 applied to a lower edge of the window opening. In other words, the window opening of the vehicle door structure 16 is larger than the daylight opening 54 of the vehicle door assembly 12. Still in other words, the window opening of the vehicle door structure 16 is an opening of the metal base structure of the vehicle door structure 16 that is configured to receive a window pane of the vehicle 10. If the sealing 50, which prevents moisture ingress into the vehicle door assembly 12 and into the interior 14 of the passenger cabin, is applied to the lower edge of the window opening, the daylight opening 54 of the vehicle door assembly 12 is created. Thus, the daylight opening 54 of the vehicle door assembly 12 is an opening of the vehicle door assembly 12 through which light from an outside of the vehicle 10 may shine through the window pane of the vehicle 10.

At is second end 44, i.e. at its end that is closer to the B-pillar 32 of the vehicle 10 than the first end 42, the reinforcement structure 38 is connected to the vehicle door structure 16 via a bracket 56.

The bracket 56 comprises a lower portion 58 and an upper portion 60. At the lower portion 58, the bracket 56 is connected to the vehicle door structure 16. At the upper portion 60, the reinforcement structure 38 is connected to the bracket 56.

The lower portion 58 and the upper portion 60 of the bracket 56 are angled with respect to one another. In the present example, the upper portion 60 and the lower portion 58 are angled at essentially 45 degrees with respect to one another.

Moreover, the lower portion 58 which is mounted to the vehicle door structure 16 is oriented substantially in parallel to a standard forward driving direction of the vehicle 10. Thus, the upper portion 60 extends at essentially 45 degrees in relation to the standard forward driving direction of the vehicle 10, i.e. in relation to a longitudinal extension of the vehicle 10.

Also, in the present example, the upper portion 60 optionally may be arranged closer to the B-pillar 32 of the vehicle 10 than the lower portion 58.

At a position in the reinforcement body 40 that corresponds to the position of the predetermined bending portion 34 along the length direction of the panel body 20, the reinforcement body 40 comprises a void 62. In this context, corresponding positions between the reinforcement body 40 and the panel body 20 mean that the position of the predetermined bending portion 34 along the length direction of the panel body 20 is the same as the position of the void 62 in the reinforcement body 40 along the length direction of the reinforcement body 40. In other words, the void 62 in the reinforcement body 40 is adjacent to the predetermined bending portion 34 in the panel body 20. In the present example, the void 62 in the reinforcement body 40 is a split that splits the reinforcement body 40 into two pieces.

If the vehicle is subject to a side impact along the third axis 30 of the panel body 40 and the vehicle door assembly 12 consequently deforms, the second end 44 of the reinforcement body remains connected to the vehicle door structure 16 via the bracket 56 and via the mounting interface 48. The first end 42 of the reinforcement body 40 remains connected to the vehicle door structure 16 via the mounting interface 48. However, since the reinforcement body 40 is split into two pieces at the void 62, that piece of the reinforcement body 40 that comprises the first end 42 may become angled to that piece of the reinforcement body that comprises the second end 44 due to the deformation of the vehicle door structure 16. Because the predetermined bending portion 34 of the panel body 40, which is mechanically weak compared to the remaining or surrounding portions of the panel body 40, is adjacent to the void 62 in the reinforcement body 40, the panel body 20 does not substantially hinder a reorientation of the two pieces of the reinforcement body 40 into an angled configuration during side impact. Instead, the panel body 20 bends around the second axis 28 at the predetermined bending portion 34, thereby providing little resistance to the deformation of the vehicle door assembly 12.

This has the effect that potentially sharp edges of the first ends 22, 42 and/or of the second ends 24, 44 of the panel body 20 and/or of the reinforcement body 40 may remain connected to the vehicle door structure 16 even though the vehicle door assembly 12 gets severely deformed during side impact. Particularly the second ends 24, 44 of the panel body 20 and of the reinforcement body 40 remaining connected to the vehicle door structure 16 have the effect that a freedom of movement for an arm of an occupant of the vehicle 10 is increased during side impact. Moreover, said second ends 24, 44 are prevented from limiting a space available for a thorax and ribs of the occupant of the vehicle 10. Furthermore, said second ends 24, 44 remaining connected to the vehicle door structure 16 create an increased space for a side airbag, if present, and/or for an inflatable curtain, if present, that may inflate in the interior 14 of the passenger cabin between an occupant of the vehicle 10 and the interior of the vehicle door structure 16. This enhances occupant safety.

Figures 4 to 8 show a second embodiment according to the present disclosure. Only the differences with respect to the first embodiment will be explained in the following.

In the example of Figures 4 to 8, the interior panel 18 is mounted to the vehicle door structure 16 in the same manner as illustrated in Figure 3b. This means that also in the example of Figures 4 to 8, the sealing 50 is arranged at a lower edge of the window opening of the vehicle door structure 16, thereby creating the daylight opening 54 of the vehicle door assembly 12. The reinforcement structure 38 is mounted to the sealing 50 via its mounting interface 48. It is to be noted that the mounting interface 48 of the reinforcement structure 38 comprises a plurality of contact points to the sealing 50 along the length of the reinforcement body 40.

The panel body 20 is attached to a top of the reinforcement body 40 such that it covers the reinforcement structure 38 and the vehicle door structure 16. The panel body 20 comprises a curvature around the first axis 26 that is convex when viewed from the interior 14 of the passenger cabin of the vehicle 10.

Figure 4 shows that the panel body 20 is connected to the reinforcement body 40 of the reinforcement structure 38 by a plurality of spot-welts 46. The spot-welds 46 are arranged between the first ends 22, 42 and the second ends 24, 44 of the panel body 20 and of the reinforcement body 40, respectively.

Figure 4 also shows that the reinforcement structure 38 is connected to the vehicle door structure 16 via the bracket 56 at the second end 44 of the reinforcement body 40.

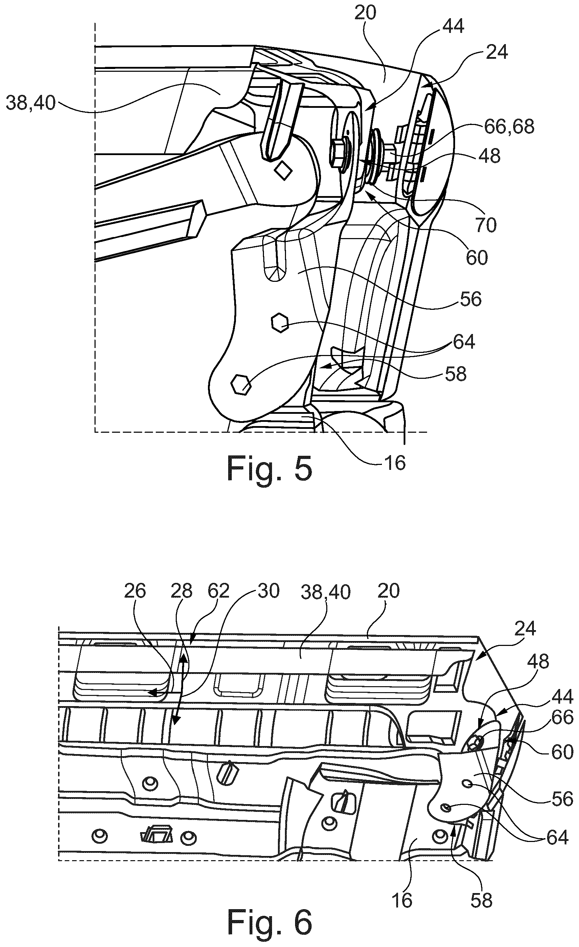

Figure 5 shows this connection in more detail. It can be seen that the lower portion 58 of the bracket 56 is connected to the vehicle door structure 16 via a first bolt 64, which is embodied by two first bolts 64 in the present example. The upper portion 60 of the bracket 56 is connected to the reinforcement structure 38 via second bolt 66.

Moreover, it is observable that the upper portion 60 of the bracket 56 is located closer to the B-pillar 32 of the vehicle 10 than the lower portion 58. This has the effect that, upon side impact and upon deformation of the vehicle door assembly 12, the upper portion 60 of the bracket 56 is less likely to hit a thorax of an occupant of the vehicle 10.

Furthermore, in Figure 5 it can be observed that the upper portion 60 of the bracket 56 is angled relative to the lower portion 58 of the bracket 56. This has the effect that upon side impact, the connection between the upper portion 60 of the bracket 56 and the reinforcement structure 38 is not loaded in pure tension but also in shear. Additionally, the extension of the lower portion 56 of the bracket is essentially parallel to the extension of the reinforcement body 40 of the reinforcement structure 38. Thereby, no stiff edges of the lower portion 56 are directed towards an occupant. Further, the configuration of the bracket 56 allows the bracket 56 to flex at high loads. Allowing the bracket 56 to flex contributes to decreasing loads experienced by the bracket connection and reduces a risk of high local forces directed towards an occupant. Since the reinforcement structure 38 comprises a plastic material, applying a shear force across a large contact area between the upper portion 60 of the bracket 56 and the reinforcement structure 38 shows a higher strength of the connection than if the connection between the bracket 56 and the reinforcement structure 38 was loaded in pure tension in a small area defined by a head 68 of or a washer 70 applied to the second bolt 66.

Figure 6 shows that the reinforcement body 40 of the reinforcement structure 38 comprises a void 62 that splits the reinforcement body 40 into two pieces. The void 62 is oriented substantially perpendicular to the length direction of the reinforcement body 40.

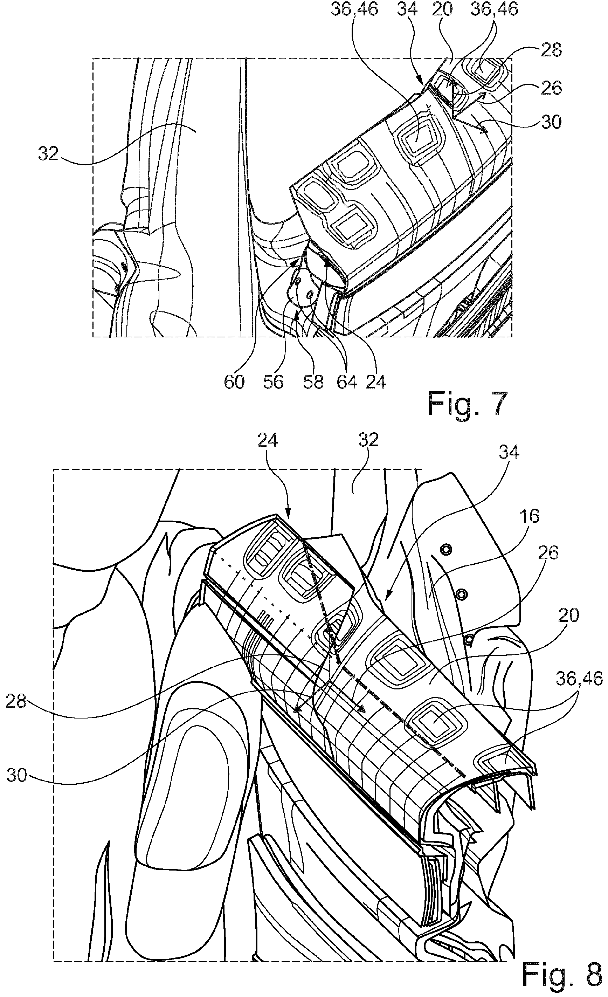

In Figure 7, a view from the interior 14 of the passenger cabin of a vehicle door assembly 12 that has been deformed due to a side impact along the third axis 30 is shown from a rear of the vehicle 10. It is observable that the second end 44 of the reinforcement body 40 is still connected to the vehicle door structure 16 via the bracket 56. Also, the second end 24 of the panel body 20 is still connected to the reinforcement structure 38. However, the panel body 20 has strongly bent around its second axis 28 in the area of the predetermined bending portion 34.

Figure 8 shows the same deformed vehicle door assembly 12 as Figure 7 but in a view from the front of the vehicle 10. A dashed line shows a bending line of the bent panel body 20 according to the present disclosure. At the predetermined bending portion 34, the bending line of the panel body 20 comprises a kink. Furthermore, it is shown that the first end 24 of the panel body 20 has remained connected to the vehicle door structure 16 via the reinforcement body 40. Thereby, a free space for an arm of an occupant of the vehicle is maintained during side impact.

By a dotted line, it is indicated in Figure 8 how the panel body 20 would have behaved without having the predetermined bending portion 34 in place. It can be seen that the potentially sharp edge at the second end 24 of at least the panel body 20 would have protruded into the interior 14 of the passenger cabin. Also, if the reinforcement structure had not comprised the void 62, the second end 44 of the reinforcement body 40 may have loosened from the interior of the vehicle door structure 16 and may also have protruded into the interior 14 of the passenger cabin. In other words, the panel body 20 would not have bent at all. Thereby, a free space for an arm of an occupant of the vehicle would have been limited during side impact.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: vehicle door assembly
- 14: interior of passenger cabin
- 16: vehicle door structure
- 18: interior panel
- 20: panel body
- 22: first end of panel body
- 24: second end of panel body
- 26: first axis
- 28: second axis
- 30: third axis
- 32: B-pillar
- 34: predetermined bending portion
- 36: attachment interface
- 38: reinforcement structure
- 40: reinforcement body
- 42: first end of reinforcement body
- 44: second end of reinforcement body
- 46: spot-weld
- 48: mounting interface
- 50: sealing
- 52: lower edge of daylight opening
- 54: daylight opening
- 56: bracket
- 58: lower portion of bracket
- 60: upper portion of bracket
- 62: void
- 64: first bolt
- 66: second bolt
- 68: head of second bolt
- 70: washer

## Claims

1. An interior panel (18) for a vehicle door, the interior panel (18) being configured to be mounted to an interior of a vehicle door structure (16), wherein the interior panel (18) comprises:
- an elongated panel body (20) having a first end (22) and a second end (24) opposite one another, and
- a predetermined bending portion (34) provided on the panel body (20) between the first end (22) and the second end (24) and configured for controlled bending upon side impact,
wherein the elongated panel body (20) comprises an attachment interface (36) for mounting the elongated panel body (20) to the vehicle door structure (16).

2. The interior panel (18) of claim 1, wherein the predetermined bending portion (34) has a locally reduced thickness.

3. The interior panel (18) of claim 1 or 2, further comprising a reinforcement structure (38) configured to support the panel body (20),
wherein the reinforcement structure (38) comprises an elongated reinforcement body (40) having a first end (42) and a second end (44),
wherein the elongated reinforcement body (40) extends substantially in parallel to the panel body (20), and
wherein the first end (42) of the reinforcement body (40) is arranged adjacent to the first end (22) of the panel body (20), and
wherein the second end (44) of the reinforcement body (40) is arranged adjacent to the second end (24) of the panel body (40).

4. The interior panel (18) of claim 3, wherein the reinforcement body (40) is configured such that a void (62) is provided adjacent to the predetermined bending portion (34) of the panel body (20).

5. The interior panel (18) of claim 3 or 4, wherein the reinforcement structure (38) comprises a mounting interface (48) for mechanically connecting the reinforcement structure (38) to the vehicle door structure (16).

6. The interior panel (18) of any one of claims 3 to 5, wherein the panel body (20) and/or the reinforcement body (40) comprise a plastics material.

7. The interior panel (18) of any one of claims 3 to 6, wherein the panel body (20) is connected to the reinforcement body (40) by at least one welded joint.

8. The interior panel (18) of claim 7, wherein the welded joint comprises a plurality of spot-welds (46) distributed between the respective first (22, 42) and second ends (24, 44) of the panel body (20) and the reinforcement body (40).

9. The interior panel (18) of any of the preceding claims, wherein the panel body (20) is at least partially curved, wherein the panel body (20) is convex when seen from a side configured to face an interior (14) of a cabin.

10. A vehicle door assembly (12) comprising:
- a vehicle door structure (16), and
- an interior panel (18) according to any of the preceding claims,
wherein the interior panel (18) is mounted to an inner side of the vehicle door structure (16).

11. The vehicle door assembly (12) according to claim 10, wherein the reinforcement structure (38) is arranged between the inner side of the vehicle door structure (16) and the panel body (20).

12. The vehicle door assembly (12) according to claim 11, wherein the reinforcement structure (38) comprises a mounting interface (48) at its second end (44),
wherein the reinforcement structure (38) is mounted to the inner side of the vehicle door structure (16) via its mounting interface (48) and via a bracket (56).

13. The vehicle door assembly (12) according to claim 11, wherein the bracket (56) comprises two portions (58, 60) which are angled relative to one another.

14. The vehicle door assembly (12) according to claim 13, wherein a portion (60) of the bracket (56) attached to the reinforcement structure (38) is arranged closer to a an end of the vehicle door structure (16) that is configured to be arranged adjacent to a B-pillar (32) location of a vehicle (10) than a portion (58) of the bracket (56) attached to the vehicle door structure (16).

15. A vehicle (10) comprising an interior panel (18) according to any of claims 1 to 9 and/or a vehicle door assembly (12) according to any of claims 10 to 14.
